# EUROPEAN PATENT APPLICATION

(11) **EP 3 339 705 A2**
(43) Date of publication of application: **27.06.2018**
(21) Application number: 16839689.3
(22) Date of filing: 27.07.2016
(51) Int. Cl.: F16L 15/00

(54) **THREADED PIPE JOINT**

(30) Priority: 21.08.2015 RU 2015135481
(71) Applicant: Joint Stock Company "Pervouralsk Pipe Plant" (JSC "Pintz"), g.Pervouralsk 623112 (RU)
(72) Inventor: GLUKHIH, Nikita Evgenyevich, Sverdlovsk region g. Pervouralsk 623104 (RU); BARABANOV, Sergey Nikolaevich, Chelyabinsk reg., g. Snezhinsk 456776 (RU); ZABOYARKIN, Artem Vladimirovich, Sverdlovsk region, g. Pervouralsk 623101 (RU); NAKONECHNIKOV, Sergey Igorevich, Sverdlovsk region, g. Pervouralsk 623104 (RU); ALEKSANDROV, Sergey Vladimirovich, Sverdlovsk region, g. Pervouralsk 623104 (RU); GOLOVIN, Vladislav Vladimirovich, g. Chelyabinsk 454078 (RU); MORGUNOV, Vasiliy Aleksandrovich, Sverdlovsk region, g. Pervouralsk 623104 (RU); FILIPPOV, Andrey Gennadyevich, Moscow 117279 (RU); KIRSHIN, Vasiliy Ivanovich, Moscow 119192 (RU); CHERNUKHIN, Vladimir Ivanovich, Moscow 109469 (RU)
(74) Representative: Isarpatent
(86) International application number: PCT/RU2016/000492
(87) International publication number: WO 2017/034438

(57) **Abstract**

The invention relates to leak-tight threaded pipe joints comprising a metal-metal seal unit. The present threaded joint for steel pipes consists of a tubular member (a nipple) and a coupling member, having situated thereon portions with an internal conical thread and with an external conical thread, wherein the nipple terminates in a tip with an axially symmetrical shape, part of the outer surface of which constitutes a sealing surface, which interacts, upon assembly of the joint, with a mating sealing surface of the coupling. Each of the sealing surfaces consists of a conical portion and a toroidal portion, wherein the toroidal portion on the nipple is situated nearer to the threaded part, and the toroidal portion on the coupling is situated further from the threaded part. In addition, the sealing surface of the nipple and also part of the non-contacting regions of the tip that are adjacent thereto are situated higher than the line of the roots of the external thread. Upon assembly of the joint, a metal-metal seal is formed which consists of three portions. The distribution of pressure in the joint provides for the necessary level of leak-tightness while maintaining high extreme-pressure properties in the region of the metal-metal seal of the threaded pipe joint. The invention increases the reliability of a threaded pipe joint under the effect of static and variable operational loads.

## Description

The disclosed invention relates to pipes used in the oil-and-gas industry, in particular, to a casing provided with very leak-tight threaded joints and intended for lining the borehole wall in a drilled well for production of oil, gas and gas condensate or for injection of any fluids into subsurface formations, as well as to a tubing provided with very leak-tight threaded joints and intended for production of oil, gas and gas condensate or for injection of any fluids into subsurface formations.

The disclosed invention relates primarily to pipes used in the development of oil and gas fields which are technologically complex in terms of their injectability and operation, namely when higher strength, reliability and tightness requirements are imposed upon pipes and threaded joints, such as:
- operability under increased bending loads, equal to 40% of the axial load equivalent along the pipe body;
- capability of maintaining tightness of a threaded joint under the action of external pressure corresponding to the limit one as per AP1 5C3 for the pipe body, and also under combined loads corresponding to 100% of the von-Mises equivalent pipe body strength;
- operability in successive tension-compression cycles as well as under sequential action of internal and external pressures, when the absolute value of acting loads is not less than 80% of the maximum loads applied along the pipe body, i.e. during cyclic operation of a well, for example, during extraction performed by the method of steam stimulation, etc.;
- applicability of pipes at an increased torque of the pipe string in case when tensile or compressive loads act simultaneously with torsion (running the pipe string into a horizontal well, casing running with rotation);
- applicability of pipes in corrosive media when a special material design of the pipe body is used;
- reusability of pipes when threaded joints undergo successive cycles of assembly and disassembly after use in a well (tubing).

Very leak-tight threaded joints for the casing or tubing pipes are meant to be used under conditions where pipes are operated in the presence of aggressive media and/or with significant multidirectional loads applied on a pipe and its threaded joint. It is just a threaded joint exposed to the greatest risk of damage, and violation of its integrity can lead to emergencies in the well accompanied with large economic losses and environmental problems. In this connection, a high wear resistance of a threaded joint is required and appropriate geometry of the tubing and casing threads shall be preserved during repeated screwing-unscrewing. Furthermore, tightness of a threaded joint shall be maintained during the whole service life of a threaded joint exposed to the action of alternating bending loads, as well as during repeated screwing-unscrewing of the threaded joint. To this effect it is necessary to prevent any gas and liquid penetrating through the metal-to-metal seal.

It shall be taken into account that the usage conditions for oil and gas well pipes used in the exploration and production of oil and natural gas are becoming increasingly stringent, as the technological complexity of deposits which are under development is increasing. Therefore, increasingly high requirements for strength and gas tightness are imposed on threaded joints for the pipes used. Currently, most of the inventions in the field described herein are aimed at ensuring that a threaded joint can provide a structural strength and some tightness margin to withstand static and consequent alternating loads corresponding to 80-100% of the maximum von-Mises equivalent load applied along the pipe body, and can also allow for disassembly of the pipe string with the possibility of its reuse.

Besides, in recent years the wells have become deeper, and the quantity of inclined or horizontal wells that have sharp or smooth bends located below the surface is growing. Also, the number of oil wells operating under unfavorable conditions, for example, at sea (offshore) or in the polar regions is increasing. Therefore, there is a steady demand for threaded joints for steel pipes with an increased tightness margin to withstand internal and external pressure, and having an extended service life.

Nowadays, casing and tubing strings with threaded joints provided with trapezoidal tapered thread and sealing elements located on internal and external mating elements (pipe and coupling, respectively), both with radial and end sealing surfaces, can be used for construction of wells with a vertically-oriented (inclined) borehole geometry or having horizontal borehole sections. Specifically, the end surfaces are further configured to create axial pre-stresses at the stage of axial making-up of a threaded joint, to create compressive stresses for the nipple part, and to create tensile stresses for the mating coupling part.

For example, the prior art knows some inventions aimed at solving problems related to ensuring high tightness of a threaded pipe joint for wells operated under conditions of high internal pressure of fluids and influence of tensile and compressive stresses. One invention differs from another by a shape, size and location of sealing surfaces on the nipple and coupling parts of a threaded joint. Specifically, selection of a particular design is based on the need to ensure both optimal distribution of the contact pressure in the metal-to-metal seal, which guarantees a required level of tightness and absence of scores in the seal when assembling the pipes, and optimal level of stresses in the threaded part and sealing unit ensuring either the joint functioning completely in the elastic domain or maintaining a required strength and tightness after applying a combination of ultrahigh loads close to 100% of the von-Mises equivalent along the pipe body.

For example, the utility model patent RU52968, published on April 27, 2006, discloses a threaded joint with a cone-to-cone seal configured such that the width of conical sealing shoulder with a taper ratio of 1:12 or 1:16 on the nipple side of the seal is 9-12 mm.

For example, the utility model patent RU116952, published on June 10, 2012, discloses a threaded joint a the cone-to-cone seal with increased taper ratio of 1:10, wherein sealing surfaces transition into the end stop surfaces through the rounding such that the seal turns out to be at the end face of the tubular member.

For example, the patent RU2310058, published on November 10, 2007, discloses a threaded joint with a sphere-to-cone seal, wherein the tapered portion with a taper ratio of 1:10 is located on the coupling member, and the spherical portion of the radial seal smoothly transitioning into the end face surface is located on the nipple member of a joint.

A common disadvantage of said arrangements is the need to reduce thickness of the nipple face so that all the elements of a threaded joint can be accommodated therein, which fact militates against a high efficiency of the join operation in compression and under external pressure.

To overcome the said disadvantage the following solutions are known in the prior art:
In the patent RU2504710 the compression strain of a joint is achieved by elongating the nipple tip (a threadless portion between the thread and the tubular member thrust face) such that the nipple under compressive loads can be compressed by an amount corresponding to closing of the gaps between the thread guiding edges;
In the patent RU176099 the compression strain is achieved by increasing the thickness of the nipple tip and correspondingly by expanding the area of interaction between the pipe and the coupling on the thrust face, wherein the contact area is not less than 60% of the cross-sectional area of the pipe body.

However these solutions are aimed at solving a partial problem of increasing the efficiency of the threaded joint operation in compression, and they do not consider a problem associated with ensuring tightness of a seal under combined loads.

Another disadvantage of the above patents is the lack of data on the location of interacting sealing surfaces, including the radial interference, a range and distribution of contact pressures after the joint has been forced assembled and is subjected to operating loads.

From the state of the art it is known that these values can have a significant effect on the tightness margin after the joint has been forced assembled and is being operated. As a result, threaded joints, the geometry of which corresponds to that described in the patents RU52968; RU116952; RU2310058, may not provide a required level of tightness in the claimed range of workloads if the sealing surface location, thread and seal interferences, and amount of the axial making-up have been selected inappropriately.

At the same time there are technical solutions where the design of a threaded joint is selected based on the level of contact stresses in the process of assembling, the amount of tightness margin, and the actual stresses acting on the joint in operation.

Specifically, the patent EA005612B1 describes the design of a threaded joint, comprising a short inclined seal of a complex shape having a conical portion and a large-radius (>20 mm) toroidal portion located on the thread side. The shape of this seal and the combination of the joint elements have been selected based on the tightness requirements to the seal under tensile load, namely such that the ratio of the integral pressure to the pipe yield pressure within the whole range of permissible tensile loads exceeds 7 mm. This condition is fulfilled due to selection of a special design and an appropriate location of the metal-to-metal seal as well as by increasing the nipple tip radial stiffness. At the same time, the problem of increasing the area of the end-face seal is further solved, which improves the joint behaviour in compression, wherein increasing of the nipple tip radial stiffness improves the joint behaviour under external pressure while improving the sealing properties. Having a large-radius toroidal portion on the thread side makes it possible to maintain the advantages of a conical sealing surface in case the loads and manufacturing errors lead to bending of the nipple tip towards the pipe axis. Analysis performed by the inventors of the claimed invention showed that due to availability of a toroidal portion bounding the cone-to-cone seal it is possible to ensure an even distribution of contact pressures, substantially reducing the peak pressure that occurs when assembling the joint with the cone-to-cone seal, and to increase the size of the interaction region where the contact stresses exceed the ultimate yield pressure of the pipe. These features of the combined seal comprising two portions, i.e. the sphere-to-cone one and the cone-to-cone one, are not disclosed in the patent EA005612B1. Studies conducted by the inventors showed that these features can be used when designing an anti-seize seal. In the patent EA005612B1, the problem of seizing is solved by using a seal with a large taper ratio (>10°), which limits the sliding distance and reduces the risk of seizing. Such a technical solution results in reduction of the pipe tip thickness and a corresponding deterioration in the joint behaviour in compression and under external pressure, as well as in decrease of the integral contact pressure under tensile load due to compliance of the thread and large inclination of the conical portion of the metal-to-metal seal. A combined seal proposed in the patent described herein provides for the tightness stability when the tip bends towards the pipe axis, but the action of combined loads can also lead to reduction in the degree of the tip bending, and therefore it is necessary to ensure stability of the combined seal operation also at the edge of the cone-to-cone portion proximal to the pipe end. This issue is not disclosed in the patent EA005612B1.

It should be noted that the patent EA005612B1 discloses the embodiment of a seal having a diameter larger than that of the thread roots at the location where the pipe thread starts. Such an embodiment allows for increasing the thickness and radial stiffness of the pipe tip. Inventors of the patent EA005612B1 indicate that such a solution makes it possible to improve sealing properties of the seal under internal pressure. Studies conducted by the present inventors showed that positioning the seal on the tip in the area above the line of the pipe thread roots enables to further obtain the following technical results:
- to decrease a radial interference in the seal so that to improve the performance of the joint under external pressure;
- to increase the limit screwing torque of the threaded joint so that to improve the performance of the joint under tension-compression cyclic loads;
- to maintain contact along the thrust face under the action of tensile loads constituting more than 60% of ultimate loads applied along the pipe bode so that to improve sealing properties of the seal under loads acting in combination with bending.

These features have not been disclosed by the inventors of the patent EA005612B1.

Inventors of another patent EA007076, F16L15/06, published on June 30, 2006, propose a threaded pipe joint with a thread and a toroidal sealing surface provided on the pipe and a mating conical surface provided on the coupling, wherein the radius of the toroidal sealing surface is 30-70 mm if the pipe diameter is 140 mm or less and 30-100 mm if the pipe diameter exceeds 140 mm. In this case, selection of the seal radius is based on the tightness requirements to the joint, namely:
- radius of the toroidal seal shall be less than the minimum value ensuring the contact length equal to or exceeding 0.5 mm. Too small radius of the seal shortens the contact axially thus impairing the seal tightness, and results in a high value of the maximum contact pressure thus increasing the risk of seizure and damage of the sealing surface when the threaded joint is repeatedly screwed and unscrewed;
- radius of the toroidal seal shall not exceed the maximum value, at which the average contact pressure exceeds the yield pressure of the pipe body by a defined number of times. Too large radius of the seal elongates the contact and correspondingly results in decrease of the average contact pressures and thus in deterioration of the joint tightness. Such a long-length seal with a reduced average contact pressure may become less tight under the action of external pressure as well as under bending loads.

Thus, selection of the seal radius in the patent EA007076 reduces to choosing between a short seal with high contact pressure and an elongated seal with low contact pressure. In this case it is necessary to ensure a minimum contact length for the short seal and a minimum level of the average contact pressure for the long one.

An option to select the radius in an analytical manner ensuring the tightness of a joint and presented in the patent EA007076 is associated with the fact that with a given value of the integral pressure within the contact defining the tightness level of a joint, the distribution of contact pressures in the sphere-to-cone seal is uniquely described by solving the Hertz contact problem. If we know an integral pressure, which is a value of the shearing force per unit of circumferential length at the location where contact pressures are applied for the threaded taper joints described herein provided with a metal-to-metal seal, it is possible to calculate the contact length, maximum contact pressure and average contact pressure within the toroidal seal having a given radius by using Hertz formulae.

Inventors of the patent EA007076 have partially solved the problem of ensuring the sealing stability of a joint under bending loads since in case of using a seal of the sphere-to-cone type or, according to the inventors, a toroidal seal it is highly likely that if the threaded joint bends at least at one cross-sectional point this seal will remain tight. However, with such a design of the threaded joint there may arise a situation where the remaining tightness of the sealing element is lost if some tensile stresses are also applied on the joint.

Specifically, such a phenomenon as the seal compaction under the action of combined loads influencing the tightness of a joint is not considered in the patent EA007076. It is known from the state of the art that the load action on a threaded joint leads to a change in the angle of bending of the nipple tip towards the pipe axis. As a result, the contact pad may be displaced if seals of the sphere-to-cone or sphere-to-sphere types are used. If such a displacement causes a situation where contact pads for different combined loads do to not meet, such a seal loses its tightness regardless of the level of actual contact pressures.

Another disadvantage of the patent EA007076 is that maximum contact pressures arising in a seal during screwing are not taken into account when choosing the seal radius. A value of this variable defines the anti-seize properties of a seal.

The main object of the invention proposed by the inventors is to eliminate said disadvantages inherent to existing technical solutions by combining technical solutions applicable to the casing pipe and technical solutions applicable to the tubing pipe. The proposed technical solution must feature a high tightness and long-run serviceability for a wide range of operational loads, including bending, combined and cyclic loads, and must retain its performance after multiple assembly/disassembly operations.

Basic factors defining the operation capability of a very leak-tight threaded joint are known from the state of the art. The anti-seize properties that make it possible to reuse such a joint are determined by the level of contact stresses during assembly and a length of the visual pathway, i.e. the higher are these characteristics, the greater is the risk of scoring when screwing the pipe joint. Gas-tightness of the joint is determined by the contact length of a metal-to-metal seal and by the value of actual contact pressures, i.e. the higher are these characteristics, the higher is the gas-tightness of the joint. Stability of the seal operation under combined operating loads is determined by the change in contact pressures when external loads are applied, i.e. as the contact pressure decreases the risk of leakage of working fluids through the metal-to-metal seal is increased when bending or tensile loads are applied to the threaded joint during operation. The ability of the joint to operate under cyclic loads is determined by a change in the level of actual stresses in the tubular and coupling members under operating loads, i.e. the larger is the area within which the actual stresses exceed the yield point and the higher is the level of this exceedance, the greater is the risk of leakage when applying a load of another sign.

All the above characteristics can be obtained using analytical solutions known from the theory of elasticity as well as by modeling the operation of the proposed arrangement by the finite-element method.

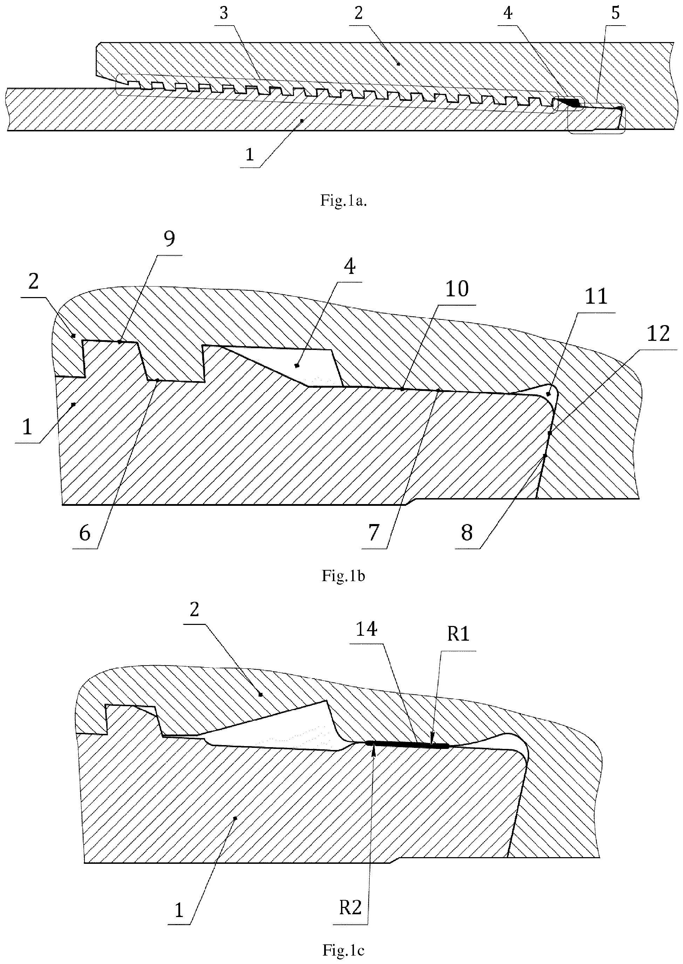

Fig. 1-14 show a threaded joint for a casing, separate structural elements of the threaded joint and its various embodiments.

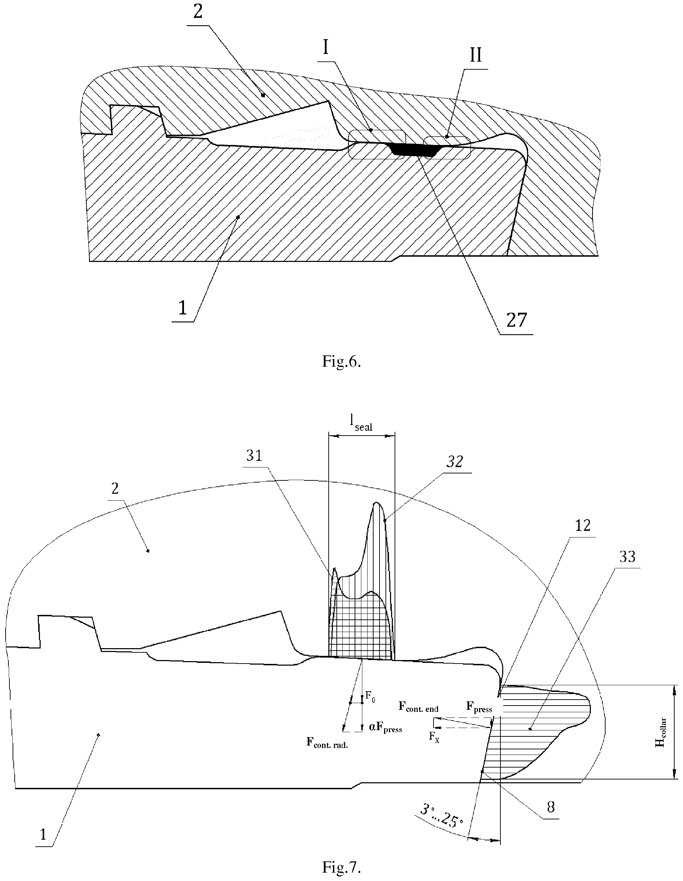

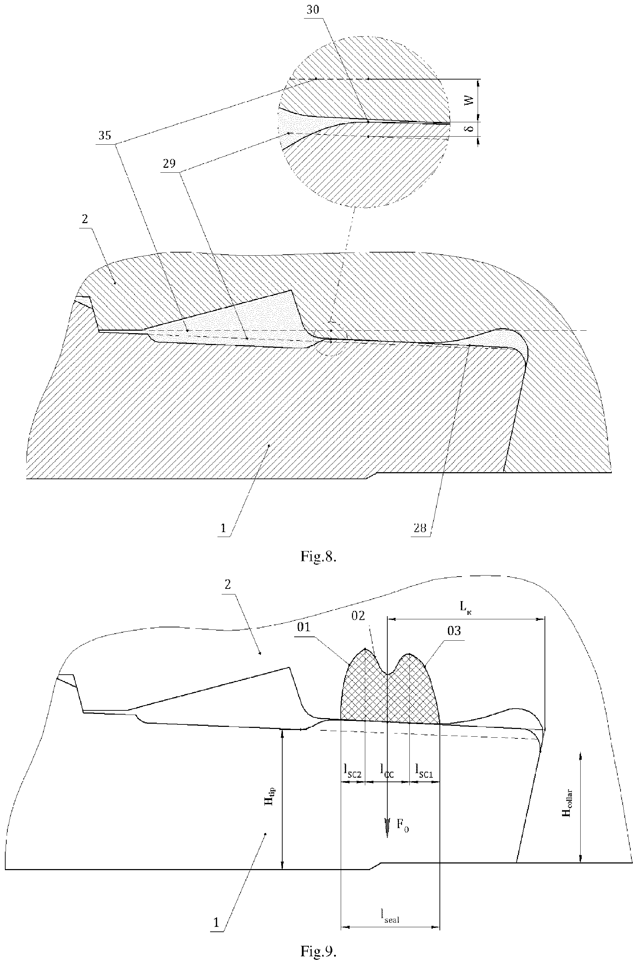

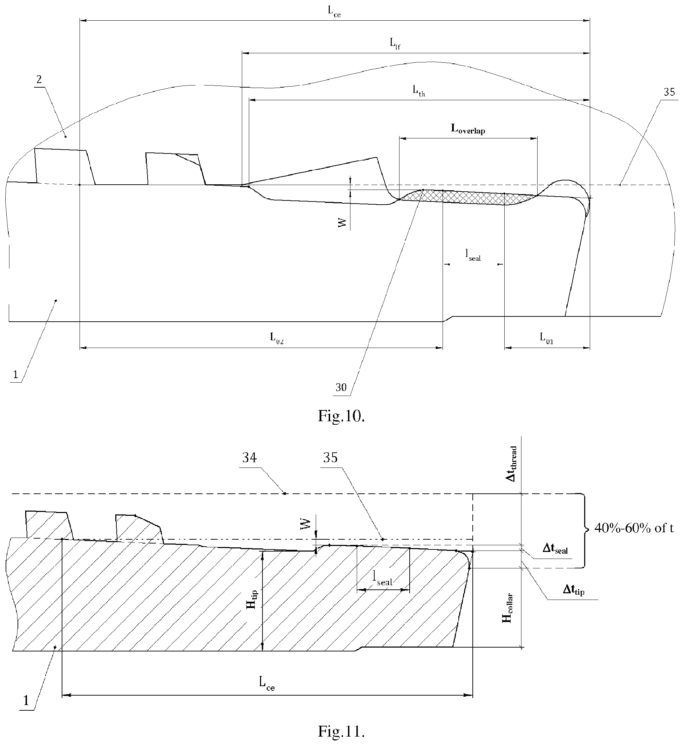

In the course of the studies conducted by the present inventors it has been found that the tightness of the joint does not depend on the shape of a seal, but is determined by the value of integral pressure in the contact area (force F₀ in Fig. 9 and force F₀+ αFₚᵣₑₛₛ in Fig. 7 acting per unit of circumferential length at the contact location). The magnitude of this force is determined by radial interference in the seal. At the same time, for a given value of radial interference the integral pressure value and, accordingly, the tightness margin will be the higher the higher is the radial stiffness at the contact location. If the location of the point of application of the resultant contact pressure (distance Lₖ in Fig. 9) coincides with the radial stiffness for different shapes of the seal, the tightness margin also coincides. A particular geometry of sealing surfaces determines the type of distribution of contact pressures in the contact area, including the extent of the contact pad (Lₛₑₐₗ in Fig. 10), the maximum and medium pressures. Also, a shape of the seal affects the behavior of the contact pad when the angle of bending of the nipple tip with respect to the pipe axis changes due to deviations in the radial interference and under multidirectional combined loads.

Thus, tightness of the joint is determined by the shape of the nipple tip and by the location of the seal on the outer surface of the tip, and it does not depend on a specific type of compaction, while the anti-seize properties and sealing stability under loads applied on a threaded joint are determined by the geometry of sealing surfaces. The conclusions drawn were used by the inventors to solve a technical problem at hand by optimizing the shape of the nipple tip and the geometry of sealing surfaces.

Inventions, the most similar in their nature, are represented by the following technical solutions:
- a tight threaded joint for oilfield casing and tubular goods with tapered threads having a cross section in the shape of an uneven trapezium with a taper ratio of 1:16 having a thread profile with a negative angle along the bearing face and an enlarged angle along the embedded face, wherein the height of the pipe thread profile is less than the height of the coupling thread profile, and wherein its sealing member comprises a spherical portion ensuring contact between the surface of the pipe (nipple) and conical surface of the coupling (patent RU2310058, published on October 10, 2007);
- a threaded pipe joint with a thread and a toroidal sealing surface provided on the pipe and a mating conical surface provided on the coupling, wherein the radius of the toroidal sealing surface is 30-70 mm if the pipe diameter is 140 mm or less and 30-100 mm if the pipe diameter exceeds 140 mm (patent EA007076, published on June 30, 2006);
- a tight threaded joint for oilfield casing and tubular goods with a cone-to-cone seal featuring increased taper ratio of 1:10, the sealing surfaces of which transition into the end stop surfaces through the rounding, and a circumferential groove is formed on the female member where the thread runs out, wherein a diameter of the said groove exceeds the internal thread diameter on the female member (patent RU116952 published on June 10, 2012);
- a very leak-tight threaded joint for tubing with a cone-to-cone seal, in which the angle of inclination of the sealing surface of the male element with respect to the thread axis is 13-18°, and the angle of inclination of the sealing surface of the female element is 8-12°, wherein a circumferential groove is formed on the female member of the joint where the thread runs out and where the sealing surface and the end stop surface converge, wherein the portion where the sealing surface and the surface of the circumferential groove of the female element converge as well as the portion where the sealing surface and the thread runout surface of the male element converge are rounded (patent RU2500875, published on December 10, 2013);
- an ultra-tight threaded pipe joint with a short inclined seal comprising a cone-to-cone portion and a large-radius (>20 mm) cone-to-sphere portion located on the thread side, wherein between the seal and the thrust collar there is an area with a gap between the tubular member and the coupling member (patent EA5005612B1, published on December 07, 2001).

The last-mentioned technical solution, i.e. the ultra-tight threaded pipe joint as per the patent EA005612B1, is accepted as a prototype for the claimed invention.

Inventors of the proposed technical invention set the following objectives:
- minimizing the risk of seizure when screwing the threaded pipe joint;
- providing high performance in compression, under action of external pressure and combined loads, including bending;
- providing its applicability for the threaded joint comprising at least two axial stops, of which one is external and another is internal;
- providing the possibility of easily screwing directly on site where pipes are used, i.e. in the field, at the well.

Furthermore, it is necessary to provide that the theoretical performance of the threaded joint tightness could not significantly decrease under adverse conditions of use in the field.

Technical result provided by the claimed invention consists in ensuring a high tightness of the joint under significant multidirectional loads (tension, compression, bending, internal and external fluid pressure), wear resistance of the joint, its improved screwing characteristics in the absence of or with minimum metal scuffing on the sealing elements and thread subject to repeated screwing-unscrewing cycles (which is more important for tubing), which will ensure trouble-free and economically efficient application of pipes equipped with the proposed threaded joint in the construction of oil and gas producing wells (casing) and for production of oil, gas and gas condensate or for injection of fluids, including produced water, into a formation.

To achieve the said objectives and eliminate the above-mentioned disadvantages inherent to existing technical solutions, the present inventors propose:
1) Use a special-shaped seal (Fig. 1_{B}, Fig. 9) comprising a toroidal-conical surface on the nipple tip and a mating conical-toroidal surface on the inner surface of the coupling, which makes it possible to ensure an even distribution of the contact pressure within the seal and stability of the tightness margin under combined loads; wherein the proposed shape for the seal enables to improve reliability of the joint under combined loads as compared with the technical solution disclosed in the patent EA005612B1 and to improve the anti-seize properties and stability of the seal operation as compared with the technical solution disclosed in the patent EA007076;
2) Increase the nipple radial stiffness in the area of the radial seal by positioning the sealing surface and adjacent areas above the line of the pipe thread roots (Fig. 8 and Fig. 11), which makes it possible to achieve results not considered in the patent EA005612B1; reduce the level of circumferential stresses in the tip while not reducing the tightness margin; increase the screwing limit torque; provide a higher possibility of axial making-up, which makes it possible to maintain the contact on thrust faces under cyclic tension-compression loads;
3) Select a location and shape of the sealing surface (Fig. 9) including the radii of circles (R1, R2 in Fig. 1_{B}) forming portions of the sphere-to-cone and cone-to-sphere radial sealing members (L_{SC1}, L_{SC2} in Fig. 9) as well as the extent of radial interference in the seal (Fig. 10) such that the contact pressures (σ_{cont}) emerged at the moment of contacting the thrust faces provide for tightness of the joint without any risk of seizing in the seal. Providing simultaneous operation of the sphere-to-cone peripheral portions and the cone-to-cone central portion (L_{CC} in Fig. 9) makes it possible to improve the anti-seize properties and to exclude such a phenomenon as the displacement of the compaction area under combined loads, which is typical for the sphere-to-sphere and sphere-to-cone seals, in particular to the technical solution disclosed in the patent EA007076.

The proposed three embodiments of the invention as well as preferred methods for their implementation and particular cases are described in more detail below. In general, each of the embodiments can be used either individually or in an arbitrary combination with the other two embodiments.

### First embodiment

A very leak-tight threaded pipe joint (Fig. 1a) comprises the internal (1) and the external (2) mating members with conical surfaces, on which threaded portions (3) having the general surface profile of a frusto-conical shape are formed, wherein radial sealing surfaces (7, 10) forming the radial seal and end sealing surfaces (8, 12) forming the end-face seal are provided on internal and external mating members (Fig. 16) from the side of the smaller diameter of the frustrum (5), wherein the radial sealing unit (Fig. 1_{B}) is formed as a combination of radial sealing surfaces of the sphere (R1)-to-cone and cone-to-sphere (R2) types provided on external (2) and internal (1) mating members, respectively, such that upon completion of assembly of the threaded joint, the contact surface of the radial sealing surfaces in the longitudinal cross-section is a complex polyline consisting of three successive sections: an arc + a straight line + an arc (14), which is designed primarily to ensure the tightness of this unit under combined loads, such as compressive, tensile and bending ones.

Providing a contact in such a way ensures high performance of the joint under bending, since when the members are displaced relative to each other due to the contact of sealing members along the spherical surface their contact is maintained for any bending variations:
- under unidirectional bending the contact is maintained along the spherical surface on the coupling and along the cone on the nipple;
- when bending direction is changed to the opposite one, the contact is maintained along the cone on the coupling and along the sphere on the nipple.

Generation of contact pressures in the seal is provided by means of the radial interference shown in Fig. 10 as an overlap of the pipe and coupling materials. When assembling the joint, the nipple tip is resiliently compressed all round such that the metal-to-metal seal portion Lₛₑₐₗ shown in Fig. 9 and Fig. 10 is formed, which is smaller than the initial length of the overlap. In this case the contact areas (see Fig. 9) are formed between the sphere on the nipple and the cone on the coupling L_{SC2}, the cone on the coupling and the cone on the nipple L_{CC}, the sphere on the coupling and the cone on the nipple L_{SC1}. High average contact pressure in the central region provides for the tightness of the seal, and simultaneous operation of the sphere-to-cone peripheral sections, where the distribution of contact pressures is described by a Hertz function, guarantees the leak-proofness stability under combined multidirectional loads. Depending on the nature of the operating loads (see Fig. 9), the contact pressures (01 and 03) may change in various directions, but the average contact pressure in the central region (02) remains stable, thus ensuring a proper tightness.

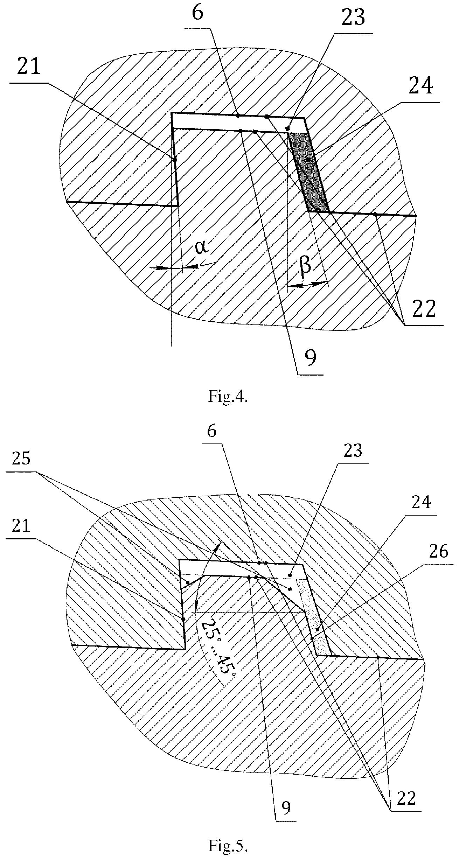

The claimed embodiment preferably uses a runout-free thread with a taper ratio from 1:10 to 1:20 (Fig. 26), with a negative angle α of the bearing face (21), with gaps (23, Fig. 4-5) between the crests of the internal thread (9) and the roots of the external thread (6), with a limited gap (24, Fig. 4 and 5) between the thread guiding edges (26) not exceeding 0.5 mm (angle β of the guiding edge is shown schematically in Fig. 4). It is also preferable that the end sealing surfaces (8, 12) are configured with a negative angle from minus 3° to minus 25°. To increase the radial stiffness of the nipple tip and to form "pockets" (4, 11 in Fig. 16 and 1_{B}) for the excess lubricant it is preferable to have the non-interacting portions (L₀₁ and L₀₂ in Fig. 10) located, respectively, between the thrust face and the origin of interaction in the seal, between the end-point of interaction in the seal and the origin of interaction along the roots of the internal thread. To ensure flushness along the inner diameter it is preferable that the inner diameter of the coupling is smaller than the mating internal diameter of the nipple tip by the extent of diametric interference in the radial seal.

The reasons for selecting such characteristics for the proposed technical solution are explained below.

Trapezoidal tapered buttress threads (3) on the male (2) and female (1) members can be configured with a taper ratio from 1:10 to 1:20 (Fig. 26).

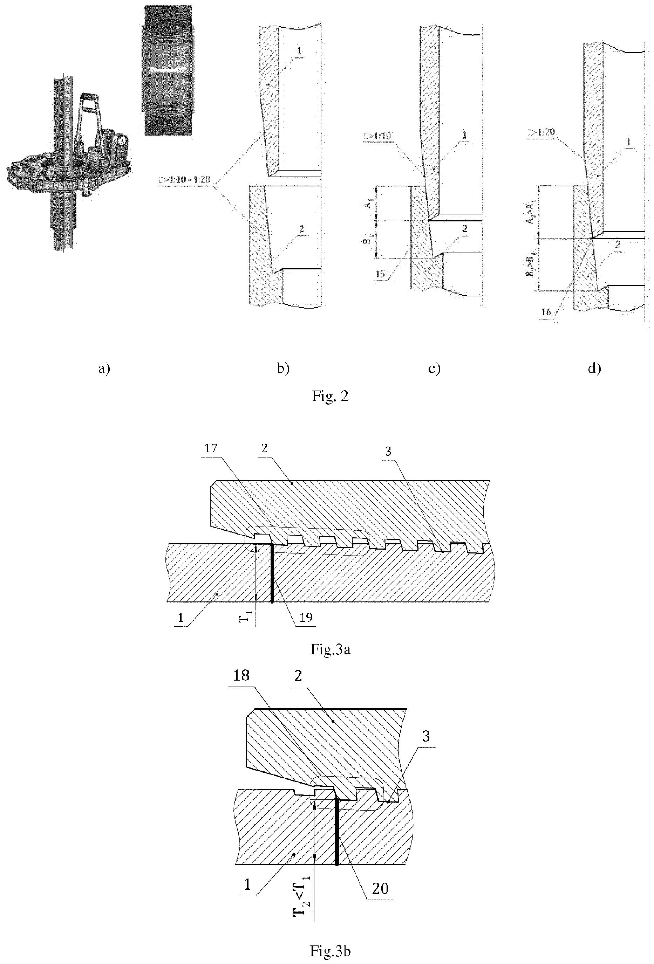

When choosing the thread taper ratio the decisive factor is the user's desire to have a threaded joint configured such that it may be screwed (Fig. 2a) at a sufficiently high speed to eventually reduce the total time spent for the well construction or running the tubing. The thread (3, Fig. 1a) with a taper ratio of less than 1:20 provides for a faster screwing of the nipple-coupling pair, but in this case it is necessary to put the nipple deeper into the coupling (16, Fig. 2_{Γ}), which increases the risk of the thread damaging. When the screwing start point is located deeply inside (16, Fig. 2_{Γ}), it is necessary to ensure a high accuracy of coaxial alignment of the nipple and coupling so that to prevent damaging of the sealing units and threads on the mating portions of the nipple and coupling, which is often difficult to ensure in the field due to winds, inaccurate or inconsistent alignment of the mast or drilling rig.

The number of full-crest turns of the thread (3, Fig. 1a) with a taper ratio of more than 1:10 (Fig. 2_{B}) will be insufficient to ensure the performance of the joint under tensile loads. Thus, it is highly reasonable to provide a combination of the thread taper ratio within the range from 1:10 to 1:20 and about 6-10 full-crest turns so that the claimed invention may obtain an optimum balance between the threaded-joint screwing speed at the well (from the location between pos. 15 and 16 in Fig. 2_{B} and 2_{Γ}) and the ability of the thread to perceive multidirectional loads.

In a particular embodiment of the invention, it is proposed to accept a taper ratio of 1:12, which will provide the required number of full-crest turns (6-10 turns) and also guarantee a fast screwing and reducing the likelihood of the thread damaging during stabbing in the field.

An additional advantage of the claimed invention in a particular embodiment is such a feature of the trapezoidal taper thread (3) as the lack of a so-called "thread runout" (Fig. 3a, 36) on the male member (2), i.e. the height of the thread profile is gradually reduced to zero (17) as the thread roots go out to the outer surface of the pipe, which is different from the forced runout, when the thread roots during threading "are brought to" the surface of the pipe (18) with a larger slope angle (and smaller taper ratio) as compared with the remaining portion of the thread. A lack of runout improves the performance of the threaded joint under external tensile loads since in this case the critical section (19) has a larger area (wall thickness T₁), which provides for lower stresses in this section under the same tensile loads as compared to the section (20) in the presence of a runout (wall thickness T₂).

In this case the end-face sealing surfaces (8, 12) forming the end-face sealing unit are configured with a negative angle. The negative angle of the thrust face creates an additional reference point that prevents the radial seal from opening due to displacement of the nipple tip towards the pipe axis under the action of bending loads and external pressure. Actually, a combination of the negative angle of the thread bearing faces and the negative angle of the thrust face creates a wedge effect thus preventing formation of gaps in the seal. In a particular embodiment, if the said angle lies within the range from minus 3 degrees to minus 25 degrees, the strength of the coupling thrust shoulder in the contact zone of the end-face sealing surfaces (8) and (12) is further provided when a compressive load is applied to the threaded joint or in case of rescrewing the joint. Limiting the value of plastic deformations of the thrust shoulder (12) of the coupling (2) makes it possible to ensure operability of the thrust face under cyclic combined loads. In case the said angle is greater than minus 3°, the wedge effect is not strong enough, whereby the thrust face does not provide sufficient support to protect the radial seal against depressurization under bending loads and external pressure. Using an angle of less than minus 25° leads to a decrease in the strength of the coupling thrust face, whereby the wedge effect decreases due to plastic deformations occurred under compressive load applied on the threaded joint or in case of rescrewing the joint, which impairs the performance of the threaded joint under cyclic combined loads.

A further advantage of using an angle from minus 3° to minus 25° is the possibility of increasing the tightness margin in the joint while performing an axial making-up as well as the possibility of rescrewing the joint not losing its tightness by expanding the range of allowable screwing torques for a threaded joint. Fig. 7 shows the distribution of contact pressures in the seal at the moment when thrust faces (31) come into contact and upon completion of axial making-up (32). With axial making-up (Fig. 7) the compressive load F*_{X}* occurs in the nipple tip, which is produced by the resultant contact pressure (33) in the end-face sealing unit F_{cont. end} and perceived by the thread bearing faces. As a result, the radial force Fₚᵣₑₛₛ arises, a component of which (αFₚᵣₑₛₛ) is transferred to the radial seal. Consequently, the tightness margin created in the process of forced assembling the joint consists of two components, i.e. a component associated with the force F₀ arising due to the radial interference in the seal and a component conditioned by the effect of the seal pressing up by the force αFₚᵣₑₛₛ arising in the process of axial making up.

Further, due to the internal sealing unit and, accordingly, two thrust end surfaces (8, 12) contacting each other, a precise fixation of a specified radial interference and an increased joint-screwing torque are ensured, whereby the performance of the threaded joint assembling is improved and traceability of the screwing correctness is increased, also visually according to the graphs of the screwing torque.

In a particular embodiment of the invention the claimed geometry of the radial sealing surface (7) on the male member (1) represented as a complex polyline consisting of three successive sections, i.e. arc + straight line + arc (14), may be changed so that to increase the wear resistance when the joints are used for tubing pipes to be screwed/unscrewed multiple times (as compared with a single screwing of a casing pipe during the well construction). The main factor due to which the threaded joint may rapidly become inoperative is the wear of the long-length contacting sealing surfaces (14). In the claimed invention the "arc + straight line + arc" contact surface (14) is sufficiently elongated in the "straight line" section such that in the process of screwing with high contact pressures this fact may lead to detachment of microscopic metal particles, which can cause a mechanical damage to the sealing members during repeated screwing-unscrewing cycles. The present inventors propose, in a particular embodiment, to divide the straight contact section into two separate parts by the groove (27 in Fig. 6) with a depth of at least 1.0 mm and a width of at least ¼ of the length of this straight line. In such a case two separate radial sealing units I and II are formed as the sphere-to-cone-to-sphere contact, which makes it possible to exclude rapid wear of the contacting surfaces of the tubing sealing unit without departing from the basic claimed embodiment of the invention.

Furthermore, sloping of the thread angle makes it possible to perform a seizure-free screwing if small gaps between the guiding edge and the thread crests/roots (22 in Fig. 4-5) are provided, which is also important when performing screwing at the well where a seizure (screwing torque increase) is possible due to incorrect alignment (misalignment) of the pipe and coupling, since in this case a modified shape of the thread enables to reduce the screwing torques. To achieve the said effect in a particular embodiment the present inventors propose (Fig. 5) to configure the thread tooth profile (9) of the internal mating member (pipe) in such a manner that it is sloped at the angle of 25-45° with respect to the pipe axis at the height of not less that ¼ of that of the tooth profile (25), and to provide gaps (24) not exceeding 0.5 mm in size along the guiding edges to be selected for a particular grade of threaded joints such that to ensure closing of the gaps with contact stresses on the end-face seal not exceeding 60% of the yield point when applying compressive loads.

Structural gaps (24) provided along the thread guiding edges allow not only to minimize the impact of excess lubricant on the threaded joint operation, but also play a very significant role in the operation of the claimed threaded joint in compression, i.e. when compressive loads are applied to the threaded joint, first loading (elastic deformation) of the end sealing unit (8, 12 in Fig. 16) takes place due to structural gaps in the thread. In this case the compressive loads applied shall not exceed such contact stresses that give rise to irreversible plastic deformations in the end-face sealing unit. Compressive loads applied may be increased only in case if apart from the elastic deformation of the end-face sealing unit, lateral surfaces of the thread tooth (26 in Fig. 5) are involved in operation at one point such that the load due to compressive stresses covers the thrust sealing unit and lateral surfaces of the thread. Finite element calculations and subsequent prototypes screwed with different torques (which respectively provide for specific contact stresses over the surface of the end-face sealing unit) have shown that under loads up to 65-70% of the yield point, the metal constituting the surface of the end-face sealing unit is in the elastic region, which ensures the lack of plastic deformation of the threaded joint in this sealing unit and, accordingly, survivability of the structure as a whole. With increasing the loads, the end-face sealing unit is subject to plastic deformation, and operational reliability of the pipes provided with the claimed threaded joint is reduced due to a possible loss of tightness. If bending loads are further applied to the threaded joint, transition from the elastic region into the plastic one takes place under much lesser loads but not exceeding 60%. Thus, it is necessary to provide a structural gap along the thread guiding edges (24 in Fig. 5) of such a size that closing of these gaps (i.e. contacting the faces of the nipple and coupling) takes place under loads applied on the joint not exceeding 60% but no more than 0.5 mm so that to exclude a decrease in the perceived load per each thread turn when the width of a tooth is reduced by more than 0.5 mm. Besides, these values will be different for different pipe sizes and, correspondingly, dimensions of the thread elements (that is, with larger dimensions the area of contact surfaces also increases).

### Second embodiment

In the second embodiment of the technical solution claimed by the inventors the trapezoidal tapered buttress threads (3) provided on the male (2) and female (1) members (Fig. 1) are configured conical, and the number of full-crest turns on the internal mating member engaged with the counter-turns of the external member is 6-10 turns. In such a case the radial sealing surfaces forming the radial sealing unit as well as the end-face sealing surfaces forming the end-face sealing unit are configured such that the internal mating member has at least one threadless portion on which the radial sealing surface (28 in Fig. 8) is located, wherein at least a part of this surface is located higher than the thread root line (29) by a value of δ ≥0.60÷0.90 mm.

In addition to the methods known from the state of the art, this embodiment of the invention allows for improving the radial stiffness of the nipple tip in the sealing region, improving the performance of the end-face seal under compressive loads, and increasing the maximum permissible screwing torque of the threaded joint. The said effects are achieved due to increasing the nipple tip thickness and width of the contact pad of the end-face seal (Hₜᵢₚ and H_{collar}, Fig. 9). The tip thickness has a much greater effect on the radial stiffness of the nipple than the size of non-contact zones L₀₁ and L₀₂ (Fig. 10), expansion of which also increases the radial stiffness of the tip at the seal location. The tip size is determined primarily by the necessity of threading the pipe tubular member (pos. 34 in Fig. 11 denotes the generatrix of the pipe wall outer surface), which leads to a reduction in the thickness t of the tip by Δ_{thread} (Fig. 11). That's why it is desirable to use a minimum number of full-crest thread turns; in the proposed embodiment of the invention there are 6-8 turns. Reducing the number of turns below six leads to a deterioration of the threaded joint performance under tensile loads. Further increase in the tip thickness by the value of δ ≥0.60÷0.90 proposed by the present inventors makes it possible to further increase the radial stiffness of the tip in the sealing region as well as along the non-interacting portion L₀₁, which improves the sealing properties of the joint. A further advantage of the seal embodiment described herein is the possibility of reducing interference in the seal while ensuring the threaded joint tightness, which enables to reduce circumferential stresses in the tip and increase the anti-seize properties of the seal.

The embodiment of the invention proposed herein also allows for increasing the width of the contact pad of the end-face seal H_{collar}, which improves serviceability of the joint under cyclic tension-compression loads. Fig. 11 shows that the width of the thrust collar is determined by the need for positioning the thread (Δt_{thread}), seal (Δtₛₑₐₗ) and transition section between the seal and the end-face sealing surface of the tip (Δtₜᵢₚ).

Preferred embodiments of the thread and end-face seal of the proposed embodiment of the claimed invention are similar to the first embodiment.

Crests of the coupling internal thread are preferably cut at the length L_{ce} (Fig. 10) so that to provide the manufacturing clearance W between the minimum inner diameter of the coupling thread (line 35 in Fig. 8) and maximum outer diameter of the nipple tip (point 30 in Fig. 8), which guarantees a qualitative assembly of the joint with possible mechanical tolerances on dimensions during manufacture. Accordingly, the following portions defining the nipple tip length (Fig. 10) are arranged on the tubular member: from the nipple fictive point to the beginning of the external thread (Lₜₕ); from the nipple fictive point to the beginning of the area of interaction with bearing faces (L_{lf}); and from the nipple fictive point to the beginning of the area of interaction with the roots of the external thread (L_{ce}). Size of these sections is proposed to be accepted constructively based on the possibility of manufacturing the threaded joint in accordance with the claimed embodiment of the invention.

Particular embodiments of the claimed invention proposed herein are similar to the first embodiment of the claimed invention:
- in a particular embodiment of the invention a taper ratio is proposed to be 1:12, which will ensure a required number of full-crest turns (6-10 turns), guarantee a fast screwing and decrease the probability of the thread damaging when stabbing in the field. Preferably, the radial seal is substantially a gently sloping surface with a small taper ratio. At the same time, it is preferable that the seal taper ratio is higher than the thread taper ratio. In a particular embodiment where the thread taper ratio is selected to be 1:12 it is suggested to use the radial seal with a taper ratio of 1:10.
- lack of the so-called "thread runout", i.e. a gradual decrease of the thread height down to zero (17 in Fig. 3a) when the thread roots go out to the pipe outer surface, which differs from the forced runout when the thread roots "are brought to" to the pipe surface in the process of threading (18 in Fig. 36) with a larger slope angle (and smaller taper ratio) as compared with the remaining portion of the thread. A lack of runout improves the performance of the threaded joint under external tensile loads since in this case the critical section (19 in Fig. 3a) has a larger area, which provides for lower stresses in this section under the same tensile loads as compared to the section (20 in Fig. 36) in the presence of runout.

- end-face sealing surfaces (8, 12 in Fig. 7) are configured with a negative angle from minus 3 degrees to minus 25 degrees, which ensures optimum distribution of the contact pressures in the region of interaction of the end-face sealing surfaces (8 in Fig. 7) and (12 in Fig. 7) under compressive load applied on the threaded joint. The optimum angle of the thrust face allows for increasing performance of the threaded joint under bending loads and external pressure and enabling operation of the coupling thrust face in the elastic region under compressive loads.
- thread tooth profile (9 in Fig. 5) of the internal mating member (pipe) is configured in such a manner that it is sloped at the angle of 25-45° with respect to the pipe axis at the height of not less that ¼ of that of the tooth profile (25 in Fig. 5), and gaps (24 in Fig. 5) are provided along the thread guiding edges not exceeding 0.5 mm in size and to be selected for a particular grade of threaded joints such that to ensure closing of the gaps with contact stresses on the end-face seal not exceeding 60% of the yield point when applying compressive loads.

### Third embodiment

Another third embodiment of the technical solution proposed by the present inventors comprises trapezoidal tapered buttress threads (3 in Fig. 1) provided on the male (2 in Fig. 1) and female (1 in Fig. 1) members as well as the sealing unit (5 in Fig. 1) configured such that the radii of circles (R1, R2 in Fig. 1_{B}) forming arcs of the sphere-to-cone and cone-to-sphere radial sealing members provided on the internal and external members, respectively, are selected in such a way that the contact pressures (σ_{cont}) emerged at the moment of contacting the thrust faces provide for tightness of the joint without any risk of seizure that may lead to damaging the sealing surfaces and failure to ensure a repeated usage of the threaded joint.

It is known from the state of the art that a gently sloping seal provides for the best radial stiffness of the nipple, and also allows for increasing the contact area on the thrust face and contact width in radial direction (H_{collar} in Fig. 9). These characteristics ensure the leak-proofness of the joint under external pressure, as well as improve the performance of the joint in compression and increase a permissible screwing torque. Additional studies conducted by the present inventors have shown that a gently sloping seal allows for achieving a required level of tightness with a reduced interference in the seal. Reducing the radial interference and a corresponding level of circumferential stresses in the nipple tip is necessary to improve the performance of the joint under external pressure, since under the action of external pressure, apart from the risk of the seal failure due to decrease in the contact pressures within the seal, there is a risk of plastic all-round compression of the nipple tip. Such an all-round compression can lead to the seal failure during successive cycles of applying internal and external pressure. Also, such a risk of the seal failure exists under conditions of alternating bending, since contact pressures in the seal increase on the side tensioned by bending and decrease on the side compressed by bending.

On the other hand a gently sloping seal is prone to seizing. The inventors of the patent EA005612B1 suppose that the reason for seizing in a gently sloping seal is a long sliding distance required for creation of a radial interference ensuring tightness of the joint. Technical solution proposed by the patent EA005612B1 consists in proceeding to a design with a steep seal having a slope angle with respect to the joint axis greater than 10° while maintaining high radial stiffness and large contact area on the thrust face due to additional modification of the design.

Studies conducted by the present inventors have shown that the risk of seizure can be reduced not only by limiting a screwing path and providing a rapid increase in the contact pressure during assembling the joint, as is typical for metal-to-metal seals with a large taper ratio, but also for the cases where gently sloping seals are used. To this effect it is necessary to limit the level of contact stresses due to smoother distribution of the contact pressure along interacting surfaces with a specified value of the integral pressure, as well as to decrease a general level of stresses in the nipple tip. Besides, thanks to a high radial stiffness of a gently sloping seal it is possible to decrease the level of radial interference required for ensuring the seal tightness, which makes it possible to partially reduce the sliding distance when screwing the joint.

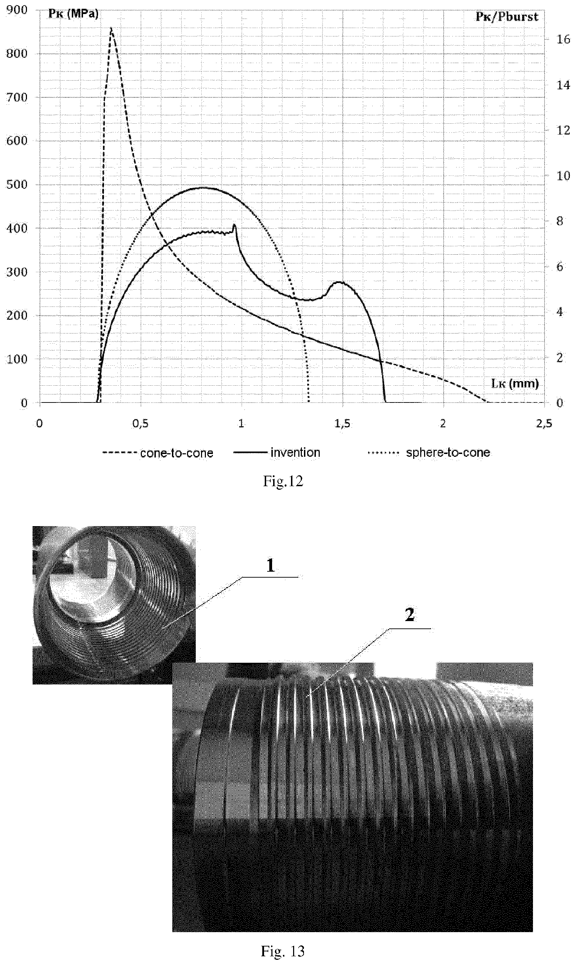

Using a complex seal comprising various interaction portions makes it possible to provide a more uniform ("smooth") pressure distribution and reduce the pressure peaks in the metal-to-metal seal. In other words, each of the sealing surfaces located on the tubular and coupling members consists of a conical portion and a toroidal portion, wherein a toroidal section provided on the nipple is located proximally to the threaded part, and the toroidal portion provided on the coupling is located distally to the threaded part. As a result, provided that appropriate dimensions have been selected for these portions, upon completion of the joint assembly the metal-to-metal seal 2-3 mm in length (Fig. 9) is formed consisting of a central cone-to-cone portion with the length of L_{CC} and peripheral regions with lengths L_{SC1} and L_{SC2}, respectively, where a change in the contact pressure corresponds to the sphere-to-cone interaction and is described by a Hertz function. In this case the maximum pressure value included into the Hertz function turns out to be significantly lower as compared with a single sphere-to-cone seal. Such a pressure distribution provides for a required level of tightness with high anti-seize properties of the metal-to-metal seal for the threaded pipe joint. Fig. 12 shows the contact pressure distribution curves for the cone-to-cone seal, sphere-to-cone seal and that of the proposed invention.

During further studies the present inventors have found that the tightness margin in the metal-to-metal seal defined by the integral contact pressure does not depend on the shape of the seal, but is determined almost completely by the radial stiffness of the nipple at the location of interacting contact surfaces. The radial stiffness in turn depends on the nipple tip thickness (Hₜᵢₚ in Fig. 9) and dimensions of the non-contacting regions between the thread and seal and between the seal and end-face of the tip (L₀₁, L₀₂ in Fig. 10). However the influence of length of the non-contacting regions as opposed to the tip thickness possesses a saturation effect, and having reached a certain value its influence on the radial stiffness is reduced to zero. In this regard, the size of these regions for existing technical solutions usually does not exceed 10 mm.

Thus, a gently sloping seal is more preferable in creation of the gas-tight joint with improved efficiency under external pressure, compression, torsion and high combined loads in case of buckling of a downhole string provided that anti-seize properties are ensured. Besides, it is known that a gently sloping seal provides for good tightness under tensioning conditions as the thread compliance has little effect on the tightness margin in a gently sloping seal.

Another important factor to be taken into account in evaluating the tightness of the threaded joint is the negligence of the seal pressing-up effect occurred during axial making up due to the wedge effect created by the thrust face with a negative slope angle (Fig. 7). In fact, as the present inventors have found and as indicated in a number of other technical solutions, a partial plastic deformation of the weakest element out of the pair comprising the nipple tip and the coupling thrust face is possible under the action of extreme compressive loads exceeding 60% of the maximum one applied along the pipe body. As a result, the thrust face may open and, therefore, the wedge effect may disappear together with a corresponding additional increase of the tightness margin under conditions of alternating loads applied during subsequent tensioning. If the tightness margin created before axial making up was too small, the seal may leak after the wedge effect has disappeared.

In contrast, the technical solution proposed by the present inventors allows for increasing the maximum permissible value of the axial making-up, which in turn improves the performance of the threaded joint in compression, under bending and external pressure. For the claimed technical solution the tightness margin can be increased by a factor of 1.5-2 due to axial making-up. Such an increase is accompanied with an appropriate increase in contact stresses, but since this growth occurs substantially step-wise, the increase in contact stresses above the yield point does not lead to problems with seizing in the metal-to-metal seal at the final stage of forced assembly of the joint.

According to the analysis presented, the claimed third embodiment of the invention may be described as follows:
- length and location of the contact pad shall be selected such that the redial stiffness of the nipple tip at the point of contact enables to ensure a required level of tightness when the radial interference in the seal is 50-80% of the value of plastic all-round compression of the nipple tip at the beginning of such a compression. In case the radial interference is lower than 50-80% of this value, the seal may fail under external pressure. In case the radial interference in the seal exceeds 80% of this value, a plastic all-round compression of the nipple tip under external pressure or a partial plastic deformation of the nipple tip on the side tensioned by bending under combined loads is possible. A further reduction in the level of tensile stresses below 80% contributes to the improvement of anti-seize properties of the seal.
- tightness of the joint is evaluated upon the prior art criterion being a ratio of the integral pressure in the seal to the yield pressure of the pipe body (effective length (Ω) of a seal is used as a criterion for example by the inventors of the patent RU2258171, and is also represented in the patent EA007076B1). This value shall be 5-10 mm. In case Ω ≤ 5 mm, a gaseous medium may penetrate into the area of contact interaction, and the seal may leak. In case Ω ≥ 10 mm, anti-seize properties of the seal may deteriorate. Preferably, the effective length Ω of the seal corresponds to the minimum value ensuring tightness under combined loads and increased internal and external pressures.
- tightness of the seal shall be evaluated without taking into account the seal pressing-up effect during axial making up, i.e. at the moment of the thrust faces coming into contact when the circumferential compressive stresses have reached their maximum and there are no axial stresses. Ensuring the seal tightness under given conditions guarantees the serviceability of the joint under cyclic tensile-compressive loads.
- radii of circles forming arcs of the sphere-to-cone and cone-to-sphere radial sealing members on the external and internal mating members as well as the length of the cone-to-cone portion shall be selected such that to reduce the pressure peaks along the edges and to ensure the contact pressure distribution as closer to the rectangular one as possible. Preferably, the level of maximum contact pressures does not exceed 80% of the yield point of the pipe body. In case the maximum contact pressures exceed this value, anti-seize properties of the seal may deteriorate. Excessive decrease in the level of contact pressures occurs due to using of too large radii bounding the seal as well as to the added complexity of manufacture and monitoring of the metal-to-metal seal. It should be noted that when too large spherical radii are used, the arrangement disclosed herein actually becomes a single sphere-to-cone seal with a sphere of large radius exceeding 100 mm.
- length of the cone-to-cone interaction region is selected in such a way that the average contact pressures are higher than the yield pressure of the pipe body. This condition together with that related to limiting maximum contact pressures and to limiting the ratio of the integral pressure to the pipe yield pressure by the lowest required value being equal to 7-8 mm makes it possible to obtain the contact pressure distribution approximated to the rectangular one and ensuring gas-tightness of the seal.

If these conditions are fulfilled, the contact pressure distribution in the proposed seal is the double-humped curve (Fig. 12) having a sufficiently high level of minimum contact stresses in the central region and approximately corresponding to a rectangular distribution of the contact pressures.

Such a pressure distribution guarantees high anti-seize properties of the seal and reusability of the threaded joint, wherein the level of contact pressures, accepted shape of the seal and values of acting stresses in the tubular and coupling members meet the technical problem assigned, i.e. guarantee high stability of the sealing properties of the joint under high-level variable combined loads in the von Mises equivalent.

The threaded pipe joint proposed by the present inventors and provided with radial metal-to-metal sealing surfaces (radial sealing and end-face sealing units) is manufactured industrially using conventional metalworking practices used in production of the tubing and casing pipes (Fig. 13).

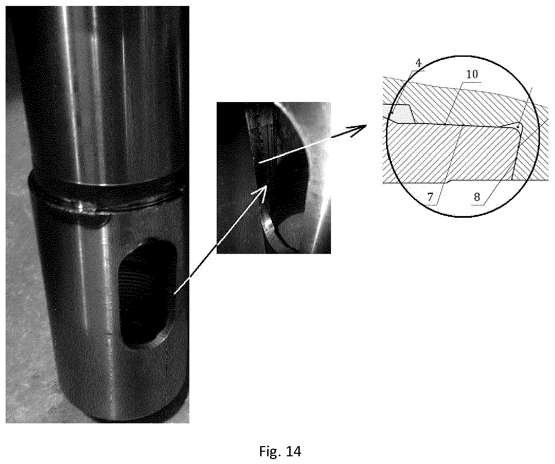

Examination of the contact zone profile performed along the sealing surfaces showed that due to elastic deformation of the metal in the contact zone a contact of said sealing surfaces in the process of screwing the thread pair takes place over a complex polyline in the "arc + straight line + arc" form (see Fig. 14). The tests accompanied with modeling of the threaded joint behavior under bending loads allows for evaluating a displacement of the sealing elements with respect to each other and to observe that the contact (tightness) is maintained under any bending:
- under unidirectional bending the contact is maintained along the spherical surface on the coupling and along the cone on the nipple;
- when bending direction is changed to the opposite one, the contact is maintained along the cone on the coupling and along the sphere on the nipple.

The finite-element calculations of the sealing unit behavior when compressive-tensile stresses are applied under conditions of external/internal pressure made during development of the threaded joint proposed by the present inventors have shown that the thickened radial sealing unit proposed by the present inventors (generatrix of the radial sealing surface is higher that the thread root line by the value of δ being equal to at least 0.60÷0.9 mm) allows for ensuring serviceability of the threaded joint along the periphery with no plastic deformation of the end-face sealing member up to loads equivalent to 80% of the pipe yield point because the pipe tip starts entering into plastic deformation condition under loads less than 80% if no thickening of 0.6-0.9 mm is provided.

Analysis of the whole set of all essential features of the proposed technical solution proves that the exclusion of at least one of them makes it impossible to provide the achievable technical result.

Analysis of the prior art shows that no threaded pipe joint comprising features identical to all the essential features of this technical solution is known, which indicates its uncertainty and, therefore, novelty.

The aforementioned proves that the claimed invention meets the "inventive level" criterion because it does not explicitly follow from the state of the art for any person skilled in the art.

Availability of the proposed subject matter is actually realized in implementing the invention, which is an indication of the industrial applicability.

## Claims

1. A threaded pipe joint comprising internal and external mating members with conical surfaces, on which threaded portions having the general surface profile of a frusto-conical shape are formed, wherein radial sealing surfaces forming a radial sealing unit and end-face sealing surfaces forming an end-face sealing unit are provided on the internal and external mating members from the side of the smaller diameter of the frustrum, **characterized in that** the radial sealing unit is substantially a gently sloping metal-to-metal contact surface and is configured as a combination of radial sealing surfaces of the sphere-to-cone and cone-to-sphere types provided on the external and internal mating members, respectively, such that upon completion of assembly of the threaded joint, the contact surface of the radial sealing surfaces in the longitudinal cross-section is a complex polyline consisting of three successive sections: an arc + a straight line + an arc.

2. The threaded pipe joint according to claim 1, wherein a taper ratio of the threaded portions is 1:12.

3. The threaded pipe joint according to claim 1, wherein the threaded portions have no thread runout.

4. The threaded pipe joint according to claim 1, wherein the end-face sealing surface is sloped at an angle from minus 25° to minus 3° with respect to the cross section of a joint.

5. The threaded pipe joint according to claim 1, wherein the straight section of the polyline consisting of three successive sections constituting the contact surface of the radial sealing surfaces, i.e. an arc + a straight line + an arc, is divided into two separate parts by a groove with a depth of at least 1.0 mm and a width of at least ¼ of the length of this straight line.

6. The threaded pipe joint according to claim 1, wherein a thread tooth profile is sloped at the angle of 25-45° with respect to an axis of the pipe at the height of not less that ¼ of that of the tooth profile.

7. The threaded pipe joint according to claim 1, wherein gaps along guiding edges of the thread are not more than 0.5 mm in size and are selected for a particular grade of threaded joints such that to ensure closing of the gaps with contact stresses on the end-face seal not exceeding 60% of a yield point when applying compressive loads.

8. A threaded pipe joint comprising internal and external mating members with conical surfaces, on which threaded portions having the general surface profile of a frusto-conical shape are formed, wherein radial sealing surfaces forming a radial sealing unit and end-face sealing surfaces forming an end-face sealing unit are provided on the internal and external mating members from the side of the smaller diameter of the frustrum, wherein the internal mating member has at least one threadless portion, on which the radial sealing surface is located, **characterized in that** the threadless portion of the internal mating member, on which the radial sealing surface is located, is configured with enhanced thickness such that the generatrix of the radial sealing surface is located higher than the thread root line by a value of δ being equal to at least 0.60÷0.9 mm, and the number of full-crest turns on the internal mating member engaged with the counter-turns of the external member is 6-10 turns.

9. The threaded pipe joint according to claim 8, wherein a taper ratio of the threaded portions is 1:12.

10. The threaded pipe joint according to claim 8, wherein the threaded portions have no thread runout.

11. The threaded pipe joint according to claim 8, wherein the generatrix of the end-face sealing unit is sloped at an angle from minus 25° to minus 3° with respect to the diametric cross section of a joint.

12. The threaded pipe joint according to claim 8, wherein a thread tooth profile is sloped at the angle of 25-45° with respect to an axis of the pipe at the height of not less that ¼ of that of the tooth profile.

13. The threaded pipe joint according to claim 8, wherein gaps along guiding edges of the thread are not more than 0.5 mm in size and are selected for a particular grade of threaded joints such that to ensure closing of the gaps with contact stresses on the end-face seal not exceeding 60% of a yield point when applying compressive loads.

14. A very leak-tight threaded joint for casing and tubing pipes comprising a male member and a female member with tapered threads in the shape of a non-equilateral trapezium and metal-to-metal sealing members, **characterized in that** radii of circles forming arcs of sphere-to-cone and cone-to-sphere radial sealing members on external and internal mating members, respectively, as well as a length and location of a region of contact interaction in the metal-to-metal seal are selected such that contact pressures σ_{cont} do not exceed 80% of a yield point, average contact pressure exceeds a yield pressure of a body of the pipe and ratio of the integral pressure to the yield pressure of a body of the pipe is 7-8 mm or more at the moment of the thrust faces coming into contact provided that the radial interference in the seal is equal to 50-80% of the value of plastic deformation of the nipple sealing member at the beginning of such a deformation.
